# EUROPÄISCHE PATENTANMELDUNG

(11) **EP 0 916 540 A2**
(43) Veröffentlichungstag der Anmeldung: **19.05.1999**
(21) Anmeldenummer: 98120949.7
(22) Anmeldetag: 05.11.1998
(51) Int. Cl.: B60K 15/03, B60K 15/077

(54) **Kraftstoffördereinheit mit einem Leitungsanschluss**

(30) Priorität: 12.11.1997 DE 19750037; 27.05.1998 DE 19823573
(71) Anmelder: Mannesmann VDO Aktiengesellschaft, 60388 Frankfurt am Main (DE)
(72) Erfinder: Reinhardt, Rolf, 36199 Rotenburg (DE); Sievers, Ralph, 65812 Bad Soden (DE); Dasbach, Burkhard, 65817 Eppstein (DE)
(74) Vertreter: Klein, Thomas, Dipl.-Ing.

(57) **Zusammenfassung**

Die Erfindung betrifft eine Kraftstoffördereinheit zum Einsatz in Kraftstofftanks von Fahrzeugen, mit einer Pumpe mit einem Gehäuse (2) und mindestens einer seitlich daran angeordneten Auslassöffnung (3), mit einem mit Kraftstoff befüllbarem Reservoir (1), in welches die Pumpe mit geringem seitlichen Einbauraum einsetzbar ist und aus dessen Füllvolumen Kraftstoff zu der Auslassöffnung (3) gefördert wird und eine an die Auslassöffnung (3) anzuschließende Leitung (15), insbesondere eine Steigleitung, die dadurch gekennzeichnet ist, daß mindestens die eine Leitung (15) mittels einer lösbaren druckdichten Steckverbindung (S) an die Auslassöffnung (3) anschließbar ist, wobei die Auslaßströmung im Bereich der Steckverbindung (S) mittels eines Krümmers (6a) umlenkbar ist.

## Beschreibung

Die Erfindung betrifft eine Krattstoffördereinheit mit einem Leitungsanschluß gemäß den Merkmalen des Oberbegriffes des Patentanspruches 1.

In einem Tank von Kraftfahrzeugen befindet sich eine Kraffstoffördereinheit, die im wesentlichen aus einem Reservoir (Schwalltopf), einer darin angeordneten und daraus Kraftstoff zum Verbrennungsmotor fördernden Kraftstoffpumpe, einer weiteren Pumpe zum Befüllen des Reservoirs und verschiedenen Leitungen besteht. Das zylinderförmig ausgestaltete Reservoir (große Höhe im Verhältnis zur Grundfläche) stellt mit seinem begrenzten Volumen sicher, daß die Kraftstoffpumpe auch bei länger einwirkenden Beschleunigungen in der Fahrwegebene ständig Kraftstoff ansaugen kann.

Bei der genannten weiteren Pumpe kann es sich um eine separate Saugstrahlpumpe handeln. Deren Treibstrahl kann vom Rücklauf einer Einspritzanlage oder vom Vorlauf der Kraftstoffpumpe gespeist werden.

Es ist auch bekannt, eine zweistufige motorisch angetriebene Kraftstoffpumpe zu verwenden, deren erste Stufe (Vorstufe) Kraftstoff aus dem Tank ansaugt und über ein Steigrohr in das Reservoir fördert, deren zweite Stufe (Hauptstufe) dann den Kraftstoff zum Verbrennungsmotor fördert. In einer Variante dazu bezieht die Vorstufe den Kraftstoff aus dem Reservoir und speist damit einerseits die Saugstrahlpumpe zum Nachfüllen des Reservoirs und andererseits einen Vorlauf zur zweiten Pumpenstufe.

Die Auslassöffnung einer solchen Vorstufe befindet sich seitlich im unteren Bereich eines Pumpengehäuses. Wenn dieses in das Reservoir eingesetzt wird, wobei die erwähnte Mündung nur geringfügig oberhalb des Bodens des relativ schmalen und hohen Reservoirs liegt, steht zwischen der Gehäusewand und der Reservoirwand nicht viel Platz zur Verfügung. Das Anschließen einer Vorlauf- oder Steigleitung bei eingebauter Pumpe gestaltet sich daher sehr schwierig. Auch der fertige Anschluß selber muß mit wenig Raum auskommen. Denkbar wäre zwar, eine am Pumpengehäuse befestigte oder in das Reservoir integrierte Steigleitung vorzusehen; dies widerspricht aber der Vorgabe, standardisierte Großserienpumpen mit einheitlichen Außenabmessungen freizügig verwenden zu können.

Der Erfindung liegt daher die Aufgabe zugrunde, im Hinblick auf die Großserienfertigung einen einfach und fehlersicher montierbaren Leitungsanschluß für eine seitlich aus einem Pumpengehäuse austretende Kraftstoffströmung bereitzustellen.

Diese Aufgabe ist erfindungsgemäß durch die Merkmale des Patentanspruches 1 gelöst.

Dadurch, daß mindestens eine Leitung mittels einer lösbaren druckdichten Steckverbindung an die Auslassöffnung anschließbar ist, wobei die Auslaßströmung im Bereich der Steckverbindung mittels eines Krümmers umlenkbar ist, ist der Vorteil gegeben, daß eine einfach und sicher montierbare Verbindung vorhanden ist, die gleichzeitig die angeschlossene Leitung sich eng das Gehäuse der Pumpe anschmiegen läßt. Dadurch wird in vorteilhafter Weise der zur Verfügung stehende Raum optimal ausgenutzt.

In Weiterbildung der Erfindung ist das pumpenseitige Ende der Leitung mit einem geraden Stecker verbunden, welcher auf einen den Krümmer bildenden gewinkelten Anschlußstutzen der Auslassöffnung aufsteckbar ist. Damit steht eine erste konstruktive Ausführungsform einer druckdichten Steckverbindung zur Verfügung, bei der die Abgangsrichtung der Leitung fest vorgegeben ist. Jedoch ragt der Anschlußstutzen relativ weit über den Umriß des Pumpengehäuses vor.

In Weiterbildung der Erfindung ist daher das pumpenseitige Ende der Leitung mit einem den Krümmer bildenden Winkelstecker verbunden, der an eine seitlich am Pumpengehäuse angeordnete Muffe der Auslassöffnung anschließbar ist. Bei einem in üblicherweise zylindrischen Pumpengehäuse verläuft daher die Achse der Auslassöffnung beziehungsweise Auslassbohrung wenigstens annähernd radial zu dem Pumpengehäuse, während die Steigleitung in dem engen Zwischenraum zwischen dem Pumpengehäuse und der Reservoirwand senkrecht oder schräg nach oben verlaufen kann. Mit einem Winkelstecker am pumpenseitigen Ende wird daher diese Vorgabe bei geringst möglichem Abstand der Leitung zu dem Pumpengehäuse erfüllt.

In Weiterbildung der Erfindung sind elastische, zum Lösen aushebbare Rastelemente zum Festlegen der Steckverbindung vorgesehen. Damit ist neben der einfachen Montage einer solchen, in vielfältigen Ausführungsformen an sich bekannten Steckverbindungen auch das einfache Lösen sichergestellt, so daß bei Bedarf ein schneller Austausch von einzelnen Komponenten ermöglicht wird.

In Weiterbildung der Erfindung ist der am pumpenseitigen Ende der Leitung angeordnete Stecker mit elastischen Rasthaken versehen, welche in korrespondierende Widerlager im Bereich der Auslassöffnung einrastbar sind. Auch dadurch wird ein schneller Austausch und die einfache und fehlersichere Montage ermöglicht. Bevorzugt werden die Rasthaken am Stecker vorgesehen, weil dieser bei Beschädigung einfacher und billiger auszutauschen ist als eine entsprechende Ausformung des Pumpengehäuses vorzunehmen. In einer bevorzugten Ausgestaltungsform haben die Rasthaken voneinander wegweisende Rastnasen, wodurch der Vorteil gegeben ist, daß man die Rasthaken lediglich von Hand bei der Demontage gegeneinander drücken muß, um die Rastnasen aus den Widerlagern auszuheben und den Winkelstecker abzuziehen.

In Weiterbildung der Erfindung sind zwei korrespondierende Rastpaare aus Rasthaken und Widerlagern beiderseits des Außenumfanges der Auslassöffnung vorgesehen. Auch dadurch wird der Demontagevorgang unterstützt und vereinfacht.

In Weiterbildung der Erfindung sind die Widerlager als an das Pumpengehäuse angeformte und durch Schlitze freigestochene brückenartige Stege ausgebildet. Dadurch wird eine einfache und widerstandsfähige Bauform der pumpenseitigen Widerlager erreicht.

In Weiterbildung der Erfindung sind die Stege länger als die Breite der Rasthaken und erstrecken sich bogenförmig konzentrisch zur Außlassöffnung über einen Teilbereich von deren Umfang. Dadurch wird in vorteilhafter Weise eine begrenzte Variabilität der Abgangsrichtung der Leitung im Rahmen des verfügbaren Einbauraumes erreicht. Denkbar ist auch, die Länge der Stege nur geringfügig größer auszubilden als die Breite der Rasthaken, wodurch der Vorteil gegeben ist, daß damit eine exakte, nahezu spielfreie Festlegung der Leitung gegen Verdrehen gegeben ist.

Eine besonders einfache Bauform des Steckers am pumpenseitigen Ende der Leitung wird realisiert, indem er im Bereich seiner Öffnung einen hohlzylindrischen Endabschnitt aufweist, welcher in eine pumpenseitig die Auslassöffnung umgebende Buchse einführbar und darin mittels eines Dichtringes abdichtbar ist.

In Weiterbildung der Erfindung weist die Steckverbindung einen Bajonettverschluß auf, so daß der Leitungsanschluß mittels dieses Bajonettverschlusses an dem Pumpengehäuses anschließbar ist. Ein solcher Bajonettverschluß ist an und für sich bekannt. Die Anwendung in diesem Fall ist von Vorteil, da nicht nur eine schnelle Montage gegeben ist, sondern darüber hinaus auch der Austausch des Leitungsanschlusses leicht möglich ist.

Ein Ausführungsbeispiel ist im folgenden beschrieben und anhand der Zeichnungen erläutert.

Es zeigen:
- Figur 1:: eine Draufsicht auf einen Ausschnitt eines Pumpengehäuses im Bereich einer Auslassöffnung und einer Steckverbindung zum Anschließen einer Steigleitung,
- Figur 2:: eine Seitenansicht im Schnitt durch die Mittelebene der Ansicht der Figur 1,
- Figuren 3 bis 5:: Ausgestaltungen eines Bajonettverschlusses.

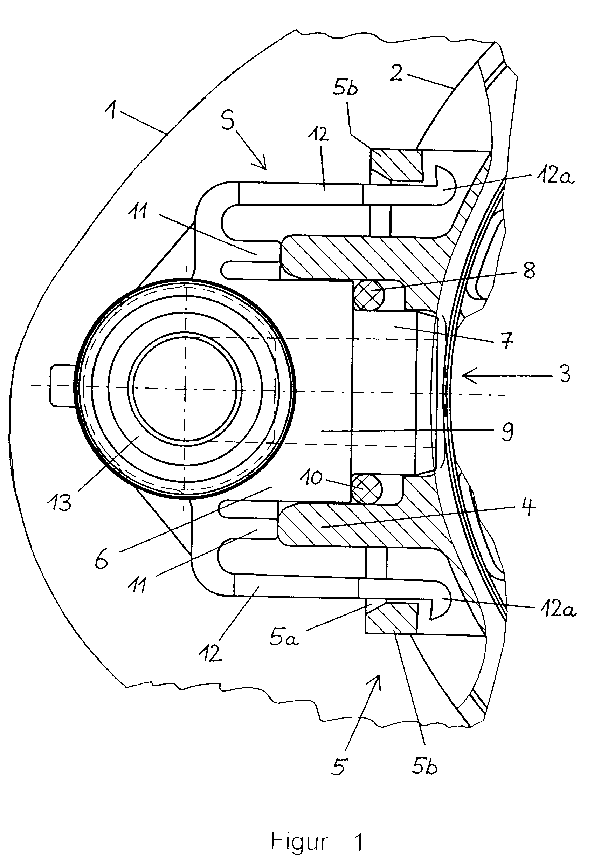

In Figur 1 ist gezeigt, daß in ein nur im Umriß angedeutetes Reservoir 1 ein nur ausschnittsweise gezeigtes zylindrisches Gehäuse 2 einer Kraftstoffpumpe mit geringem seitlichen Einbauraum eingesetzt ist. Die Kraftstoffpumpe kann zum Beispiel in an sich bekannter Weise eine zweitstufige elektromotorisch angetriebene Großserienpumpe sein, die ein oder zwei Pumpenräder mit einer Motorwelle antreibt und in deren Gehäuse die zugehörigen Kanäle ausgebildet sind.

Weiter ist in Figur 1 eine Auslassöffnung 3 gezeigt, die seitlich beziehungsweise in radialer Richtung aus dem zylindrischen Gehäuse 2 austritt. Hier kann zum Beispiel ein Auslaß einer ersten Pumpenstufe (Vorstufe) ausmünden, die mit einer relativ geringen Druckdifferenz arbeitet und deren Kraftstoffstrom eine Saugstrahlpumpe zum Befüllen des Reservoirs 1 speist. Die Auslassöffnung 3 befindet sich mit geringem Abstand oberhalb des Bodens des Reservoirs 1 und neben dessen Seitenwand. Sie ist von einer an das Gehäuse 2 angeformten hohlzylindrischen Buchse 4 umgeben. Beiderseits des Außenumfanges der Buchse 4 sind Widerlager 5 als passive Rastelemente vorgesehen, die gemäß Figur 1 als durch Schlitze 5a freigestochene Stege 5b ausgeführt sind. Letztere sind vorzugsweise brückenartig ausgebildet und beiderseits der Schlitze fest an das Pumpengehäuse angespritzt.

Ein Winkelstecker 6 ist mit einem hohlzylindrischen Endabschnitt 7 in die Buchse 4 eingesteckt und bildet damit eine Steckverbindung S. Zwischen der äußeren Mantelwand des Endabschnittes 7 und der Innenwand der Buchse 4 ist ein Dichtring 8 angeordnet. Dieser kann in nicht näher gezeigter Weise entweder in der Buchse 4 oder auf dem relativ kurzen Endabschnitt 7 des Winkelsteckers 6 festgelegt sein. Bei Bedarf kann zu seiner axialen Festlegung eine entsprechende Nut vorgesehen sein, die den Winkelstecker 6 in der Buchse 4 oder auf dem Endabschnitt 7 festhält, wenn die Steckverbindung S gelöst wird. Der äußere Rand des Endabschnittes 7 ist angefast, damit er leicht in den Dichtring 8 eingeführt werden kann, ohne diesen zu beschädigen. An dem Endabschnitt 7 des Winkelsteckers 6 schließt sich ein Mittelabschnitt 9 mit vergrößertem Durchmesser an, der nahezu dem Innendurchmesser der Buchse 4 entspricht und so den Winkelstecker 6 radial in der Buchse 4 abstützt. Denkbar ist es, hier eine Gleitpassung vorzusehen. Der Dichtring 8 stützt sich in axialer Richtung gegen eine Schulter 10 ab, die den Übergang beziehungsweise Durchmessersprung von dem Endabschnitt 7 zu dem Mittelabschnitt 9 bildet. An den Mittelabschnitt 9 schließen sich über dessen Außenmaß hinausragende Ansätze 11 an, die bei zusammengefügter Steckverbindung S auf der Stirnfläche der Buchse 4 aufsitzen und damit einen Anschlag bilden, bis zu dem der Winkelstecker 6 maximal einschiebbar ist. Sie bilden zugleich eine Sicherung gegen versehentliches Verquetschen des Dichtringes 8. Im Bereich dieser Ansätze 11 sind weiterhin als aktive Rastelemente elastische Rasthaken 12 einstöckig an dem Winkelstecker 6 angeformt. Sie liegen in der Draufsicht beidseits der Mittelachse der Buchse 4, somit einander diametral gegenüber. Ihre voneinander wegweisenden Rastnasen 12a sind beiderseits der Buchse 4 hinter die Stege 5b der Widerlager 5 eingefallen, nachdem die freien Enden der Rasthaken 12 durch die Schlitze 5a eingeführt worden sind. Zusammen mit der radialen Führung in der Buchse 4 ist damit ein hinreichend sicherer Halt der Steckverbindung S erreicht. Auch ist dieser verdrehsicher und kann bei entsprechender Auslegung der Rastelemente nur in einer vorgegebenen Stellung zusammengefügt werden. Zum Lösen dieser druckdichten Steckverbindung S sind einfach die beiden Rasthaken 12 von Hand gegeneinander zusammenzudrücken, wobei die Rasthaken 12 aus den Widerlagern ausgehoben werden, um danach den Winkelstecker 6 in Achsrichtung der Auslassöffnung 3 abzuziehen. Mit der Bezugsziffer 13 ist noch ein Anschlußstutzen des Winkelsteckers 6 bezeichnet, auf den ein Schlauch oder dergleichen aufschiebbar ist.

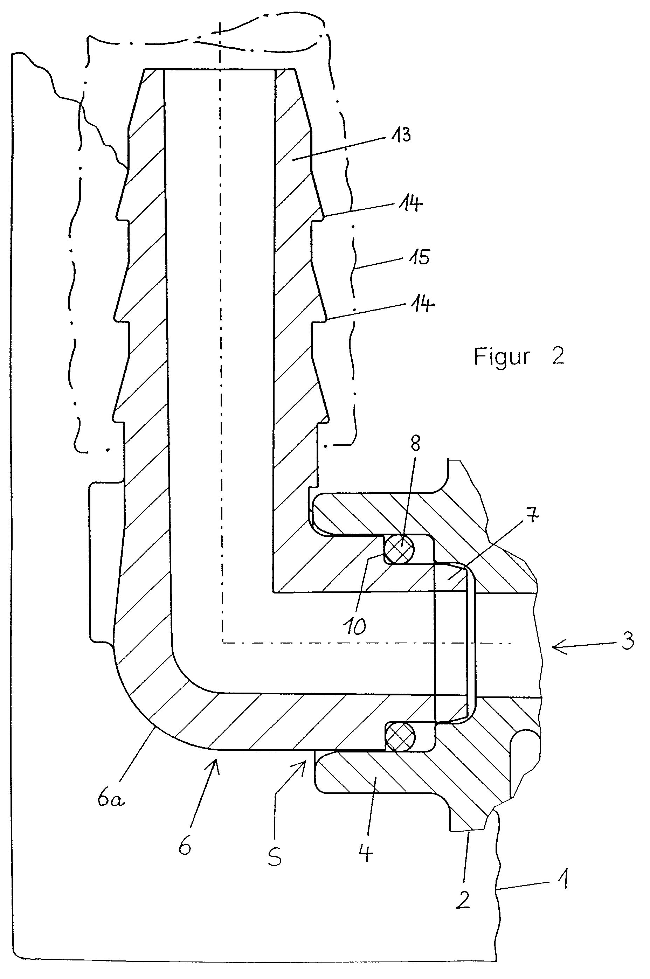

Figur 2 zeigt die Gestalt des Winkelsteckers 6. Hier ist der in die Auslassöffnung 3 eingesetzte Endabschnitt 7 erkennbar sowie der axial an der Schulter 10 anliegende Dichtring 8, während die Rastelemente nicht dargestellt sind. Ein Rasthaken nebst Widerlager ist weggeschnitten, während das andere, gegenüberliegende Rastpaar durch die Buchse 4 verdeckt ist. Weiterhin ist erkennbar, daß der Winkelstecker 6 ein Krümmer 6a bildet, der die Strömung aus der Auslassöffnung 3 in unmittelbarer Nähe zu der Wand des Gehäuses 2 um etwa 90° umlenkt. Denkbar sind hier auch andere Umlenkwinkel. Sein nach oben weisender Anschlußstutzen 13 ist mit umlaufenden, in etwa sägezahnförmigen Rippen 14 versehen, die einem Abziehen einer aufgeschobenen, hier nur strichpunktiert angedeuteten Leitung 15 entgegenwirken. Bei Bedarf sind weitere Mittel zum Sichern des Zusammenhalts der Leitung 15 und des Anschlußstutzens 13 wie z.B. Schlauchschellen oder dergleichen vorzusehen. In einer nicht dargestellten Ausführungsform des Winkelsteckers 6 weist dieser mehrere Anschlußstutzen 13 auf und bildet somit einstöckig als Verzweigung den Anschluß mehrere Leitungen an dieselbe Auslassöffnung. Dies ist für einen solchen Einsatzfall von Vorteil, bei dem die vor der Auslassöfffnung liegende Pumpenstufe mehrere nachgeordnete Einrichtungen zu beliefern hat. Insbesondere kann auf diese Art und Weise eine in bekannter Form bodennah im Reservoir angeordnete Saugstrahlpumpe auf kurzem Wege mit einem Treibstrahl beliefert werden, wenn die Vorstufe der Kraftstoffpumpe aus dem Reservoir ansaugt.

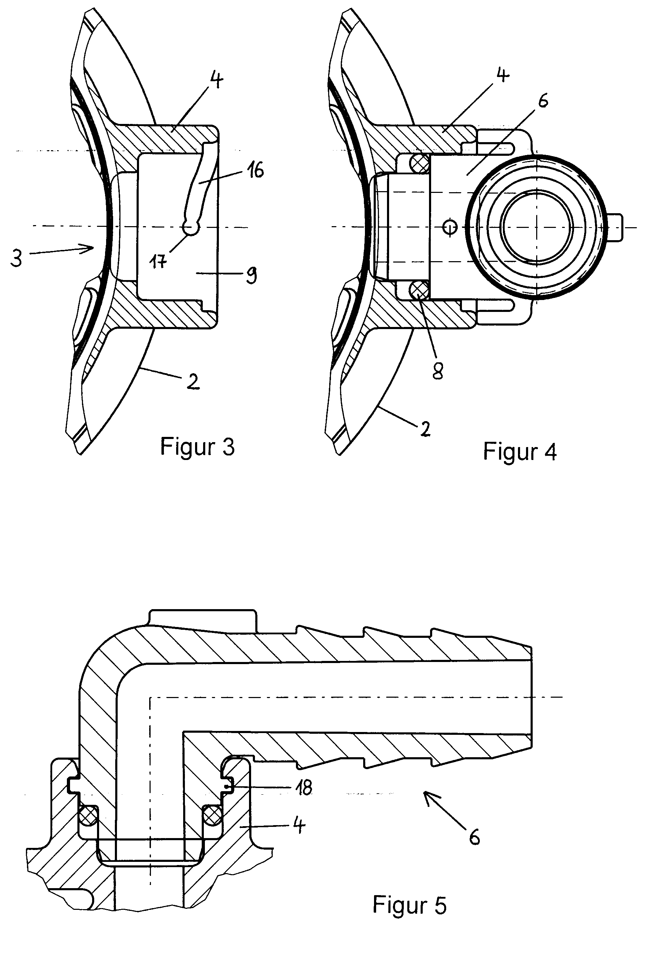

In den Figuren 3 bis 5 ist die Ausgestaltung eines Bajonettverschlusses zum Anschluß des Winkelsteckers 6 (beziehungsweise allgemein eines Leitungsanschlusses) an das Gehäuse 2 gezeigt.

In Figur 3 ist gezeigt, daß das Gehäuse 2 in seinem Mittelabschnitt 9 wenigstens zwei Führungsnuten 16 aufweist, die spiralförmig zulaufend im Mittelabschnitt 9 angeordnet sind. Am Ende einer Führungsnut 16 ist eine Ausgestaltung für eine Preßpassung 17 vorgesehen, die noch beschrieben wird.

In Figur 4 ist der montierte Winkelstecker 6 zu sehen. Der Bajonettverschluß ist so ausgelegt, daß im montierten Zustand die Dichtung 8 von dem Winkelstecker 6 zusammengedrückt wird. Zur Montage kann der Winkelstecker 6 mittels zweier gegenüberliegender Führungsstifte (hier nicht gezeigt), die sich auf dem Mittelabschnitt 9 befinden, definiert an die Öffnung (Buchse 4) an dem Gehäuse 2 angesetzt und durch Drehung in seine Endposition gebracht werden. Mittels der Preßpassung 17 in den Führungsnuten 16 kurz vor Erreichen der Endposition wird der Winkelstecker 6 nach dem Einrasten der Führungsstifte fest, aber auch wieder lösbar, mit dem Gehäuse 2 dichtend verbunden.

Figur 5 zeigt eine Seitenansicht im Schnitt durch die Mittelebene der Ansicht der Figur 4, wobei noch ergänzend zu erkennen ist, daß der Winkelstecker 6 Führungsstifte 18, die auch als Führungsbahnen ausgebildet sein können, aufweist.

### Bezugszeichenliste:

- 1.: Reservoir
- 2.: Gehäuse
- 3.: Auslaßöffnung
- 4.: Buchse
- 5.: Widerlager
- 5a: Schlitze
- 5b: Stege
- 6.: Winkelstecker
- 6a: Krümmer
- 7.: Endabschnitt
- 8.: Dichtring
- 9.: Mittelabschnitt
- 10.: Schulter
- 11.: Ansätze
- 12.: elastische Rasthaken
- 12a: Rastnasen
- 13.: Anschlußstutzen
- 14.: Rippen
- 15.: Leitung
- 16.: Führungsnut
- 17.: Preßpassung
- 18.: Führungsstifte
- S: Steckverbindung

## Patentansprüche

1. Kraftstoffördereinheit zum Einsatz in Kraftstofftanks von Fahrzeugen, mit einer Pumpe mit einem Gehäuse (2) und mindestens einer seitlich daran angeordneten Auslassöffnung (3), mit einem mit Kraftstoff befüllbarem Reservoir (1), in welches die Pumpe mit geringem seitlichen Einbauraum einsetzbar ist und aus dessen Füllvolumen Kraftstoff zu der Auslassöffnung (3) gefördert wird und eine an die Auslassöffnung (3) anzuschließende Leitung (15), insbesondere eine Steigleitung, dadurch gekennzeichnet, daß mindestens die eine Leitung (15) mittels einer lösbaren druckdichten Steckverbindung (S) an die Auslassöffnung (3) anschließbar ist, wobei die Auslaßströmung im Bereich der Steckverbindung (S) mittels eines Krümmers (6a) umlenkbar ist.

2. Kraftstoffördereinheit nach Anspruch 1, dadurch gekennzeichnet, daß das pumpenseitige Ende der Leitung (15) mit einem geraden Stecker verbunden ist, welcher auf einem den Krümmer (6a) bildenden gewinkelten Anschlußstutzen (13) der Auslassöffnung (3) aufsteckbar ist.

3. Kraftstoffördereinheit nach Anspruch 1, dadurch gekennzeichnet, daß das pumpenseitige Ende der Leitung (15) mit einem den Krümmern (6a) bildenden Winkelstecker (6) verbunden ist, der an eine seitlich am Pumpengehäuse (2) angeordnete Muffe (4) der Auslassöffnung (3) anschließbar ist.

4. Kraftstoffördereinheit nach einem der vorhergehenden Ansprüche, dadurch gekennzeichnet, daß elastische, zum Lösen aushebbare Rastelemente [Rasthaken 12] zum Festlegen der Steckverbindung (S) vorgesehen sind.

5. Kraftstoffördereinheit nach Anspruch 4, dadurch gekennzeichnet, daß der am pumpenseitigen Ende der Leitung (15) angeordnete Stecker (S) mit elastischen Rasthaken (12) versehen ist, welche in korrespondierende Widerlager (5) im Bereich der Auslassöffnung (3) einrastbar sind.l

6. Kraftstoffördereinheit nach Anspruch 5, dadurch gekennzeichnet, daß die Rasthaken (12) voneinander wegweisende Rastnasen (12a) aufweisen.

7. Kraftstoffördereinheit nach Anspruch 5 oder 6, dadurch gekennzeichnet, daß zwei korrespondierende Rastpaare aus Rasthaken (12) und Widerlagern (5) beiderseits des Außenumfanges der Auslassöffnung (3) vorgesehen sind.

8. Kraftstoffördereinheit nach Anspruch 5, 6 oder 7, dadurch gekennzeichnet, daß die Widerlager (5) als an das Pumpengehäuse (2) angeformte und durch Schlitze (5a) freigestochene brückenartige Stege (5b) ausgebildet sind.

9. Kraftstoffördereinheit nach Anspruch 8, dadurch gekennzeichnet, daß die Stege (5b) länger sind als die Breite der Rasthaken (12) und sich bogenförmig konzentrisch zur Auslassöffnung (3) über einen Teilbereich von deren Umfang erstrecken.

10. Kraftstoffördereinheit nach einem der vorhergehenden Ansprüche, dadurch gekennzeichnet, daß der Stecker (6) am pumpenseitigen Ende der Leitung (15) im Bereich seiner Öffnung einen hohlzylindrischen Endabschnitt (7) aufweist, welcher in eine die Auslassöffnung (3) umgebende Buchse (4) einführbar und darin mittels eines Dichtringes (8) abdichtbar ist.

11. Kraftstoffördereinheit nach einem der vorhergehenden Ansprüche, dadurch gekennzeichnet, daß die Steckverbindung (S) Anschlußstutzen (13) für mehrere an die Auslassöffnung anzuschließende Leitungen (15) umfaßt.

12. Kraftstoffördereinheit nach einem der vorhergehenden Ansprüche, dadurch gekennzeichnet, daß die Steckverbindung (S) einen Bajonettverschluß aufweist.
